# EUROPEAN PATENT SPECIFICATION

(11) **EP 2 976 253 B1**
(45) Date of publication and mention of the grant of the patent: **05.08.2020**
(21) Application number: 14732026.1
(22) Date of filing: 20.03.2014
(51) Int. Cl.: B62J 13/04

(54) **CHAIN COVER AND METHOD**
KETTENSCHUTZ UND VERFAHREN
GARDE-CHAÎNE ET PROCÉDÉ ASSOCIÉ

(30) Priority: 20.03.2013 NL 2010491
(43) Date of publication of application: 27.01.2016
(73) Proprietor: VANMOOF B.V., 1092 AD Amsterdam (NL)
(72) Inventor: CARLIER, Ties Jonan Midas, NL-1092 AD Amsterdam (NL)
(74) Representative: Hoeben, Ferdinand Egon
(86) International application number: PCT/NL2014/050168
(87) International publication number: WO 2014/148899

(56) References cited:
- EP-A1- 1 623 916
- EP-A2- 2 003 048
- DE-A1- 3 317 157
- JP-A- 2007 302 206

## Description

The present invention relates to a chain casing for encasing a chain of preferably a vehicle such as a cycle. The present invention also relates to a method for mounting a chain casing.

Chain casings have for a long time been a troublesome issue for cycle manufacturers because of durability and the costs thereof. The mounting of chain casings is difficult and requires mounting materials such as brackets specifically adapted to the type of chain casing and the frame on which they are mounted, generally by means of a mounting bracket on the front part of the chain stay and a mounting bracket on the rear part of the chain stay. A further drawback of chain casings for the purpose of avoiding contact with the chain is that they greatly influence the appearance of the cycle on which they are applied.

Known from JP-A-2007 302206 is a chain case for a bicycle which can be installed to a bicycle with exterior speed change gear with loose chain covering parts extending from a main chain wheel part in a flexible manner. This document can be seen to disclose the features of the preamble of claim 1.

In order to obviate such drawbacks, and therefore provide the prior art with an improved technology, the present invention provides a chain casing according to claim 1.

An advantage of such a chain casing is that, because of the use of the positioning means, it can be positioned in simple manner relative to the central axis of the main chain wheel, while having the benefits of the features of claim 1.

The term "main chain wheel encasing element" is understood within the present definition of the invention to mean the chain wheel from which the spanning chain part encasing elements extend. The main chain wheel can be a driven chain wheel, such as the pedal spindle chain wheel in the case of a cycle, but can also be a chain wheel which forms part of a broader arrangement of chain wheels over which a chain can be arranged.

According to a first preferred embodiment, the positioning means extend from the main chain wheel encasing element in the direction of a central axis thereof. It hereby becomes easily possible to bring the main chain wheel encasing element into line with the main chain wheel for an optimal arrangement.

The positioning means are more preferably suitable for attachment relative to drive means for driving the main chain wheel or a housing thereof, such as a crank or a crank tube. This further simplifies the positioning.

In a further preferred embodiment the positioning means are suitable for slidable mounting in the direction of the central axis of the main chain wheel, preferably wherein they remain slidable during use. Alignment of the chain casing relative to the main chain wheel during assembly is hereby easy to realize and almost automatically guaranteed. Displacements during use are hereby compensated in advantageous manner.

This is more preferably realized by means of a mounting element or mounting assembly for mounting on the drive means for driving the main chain wheel or a housing thereof, preferably comprising an external surface suitable for providing a slidable mounting. Owing to a free arrangement by means of such an external surface the automatic positioning or orientation remains guaranteed.

According to a further preferred embodiment, the main chain wheel encasing element has a variable diameter. It hereby becomes possible for chain wheels with differing diameter to be applied. Equally important is that it hereby becomes possible to align the spanning chain part encasing elements in a direction which is suitable per application, such as the direction of a rear chain wheel of a cycle. It is likewise possible to arrange a chain in different directions, for instance in an application wherein the chain runs from the main chain wheel to two other chain wheels.

The term "main chain wheel encasing element" is understood within the present definition of the invention to mean the chain wheel from which the spanning chain part encasing elements extend. The main chain wheel can be a driven chain wheel, such as the pedal spindle chain wheel in the case of a cycle, but can also be a chain wheel which forms part of a broader arrangement of chain wheels over which a chain can be arranged.

In the casing assembly more preferably the main chain wheel encasing element and the spanning chain part encasing element are formed together comprising two shell parts. An advantage of such a construction is that an easy assembly is realized by first mounting a first shell part and subsequently fixing a second shell part thereto, for instance by means of a connection with snap elements. A further advantage is that both shell parts are identical. According to the present embodiment both shell parts can even be produced in an identical manner while one of the shell parts is provided with the positioning means, wherein all parts can be manufactured in the same mould. The shell parts are more preferably provided with fixing means, such as snap fixing means, for mutual attachment of the shell parts.

In a further preferred embodiment the shell parts comprise an annular element for the purpose of forming a part of the main chain wheel encasing element, the annular element preferably having an interruption for the purpose of providing a variable diameter and/or circumference of the annular element.

Provided in a further preferred embodiment for the purpose of aligning the spanning chain part encasing elements are aligning means for aligning one or two spanning chain part encasing elements in a suitable orientation for the purpose of guiding the chain to a further chain wheel or a driven chain wheel. A further advantage of such aligning means is that they can fit in with different sizes of chain wheel applied on this side of the chain casing in simple manner.

The aligning means more preferably take an adjustable form in order to provide an adjustable setting of the direction of the spanning chain part encasing element or elements, preferably relative to the further chain wheel or the driven chain wheel. Using one type of aligning means the chain casing can hereby be applied with different chain wheel sizes on this side. These are preferably embodied as one or more solid-state elements, each suitable for one or more chain wheel sizes.

The aligning means more preferably comprise mounting means for mounting in a predetermined orientation relative to a central axis of the further chain wheel or the driven chain wheel. This further simplifies a simple orientation relative to this chain wheel.

For the purpose of providing a high degree of robustness, low wear and low noise production, the main chain wheel encasing element and/or the spanning chain part encasing element are manufactured from a flexible plastic such as a flexible polymer or mixtures thereof, such as PP. Even though the positioning means and aligning means provide for an optimal positioning relative to the chain, this type of chain casing is not configured to avoid all contact with the chain, and this preferred embodiment does provide these advantages.

The main chain wheel encasing element and/or the spanning chain part encasing element more preferably have a cross-section suitable for close fitting to the chain. A chain casing can hereby be realized with a highly desirable profile, i.e. a minimal profile, or a profile which realizes a minimal change in a cycle when compared to non-use of a chain casing.

The height of the spanning chain part encasing element and/or the main chain wheel encasing element is more preferably less than three times the height of the chain, preferably less than two and a half times the height of the chain, more preferably less than twice the height of the chain, more preferably less than one and a half times the height of the chain.

A desirable appearance is provided using such dimensions. Such dimensions are possible due to the measures described in the foregoing.

The measure of the variable diameter of the main chain wheel encasing element and/or the measure of the interruption of the annular element are instrumental for the alignment of the spanning chain part encasing elements.

A further aspect of the present invention provides a method for mounting a chain casing, comprising steps for:
- mounting a mounting element or mounting assembly on drive means for driving a main chain wheel or a housing thereof,
- mounting positioning means for the chain casing slidably relative to the mounting element or mounting assembly.

This method can preferably be applied to a chain casing as described in the foregoing.

The method more preferably comprises steps for:
- optionally mounting the positioning means on a main chain wheel encasing element,
   - fixing a shell part of the chain casing to a further shell part of the chain casing in order to form the casing assembly.

Further advantages, features and details of the present invention will be described in greater detail hereinbelow on the basis of one or more preferred embodiments with reference to the accompanying figures. Similar, though not necessarily identical components of different preferred embodiments are designated with the same reference numerals.
Fig. 1 is a perspective view of a first preferred embodiment according to the present invention.
Fig. 2 is a perspective view of a detail of a preferred embodiment.
Fig. 3 shows several views of a mounting arrangement of a preferred embodiment.
Fig. 4 is a perspective view of a further preferred embodiment.
Fig. 5 is a perspective view of a detail of a further preferred embodiment.

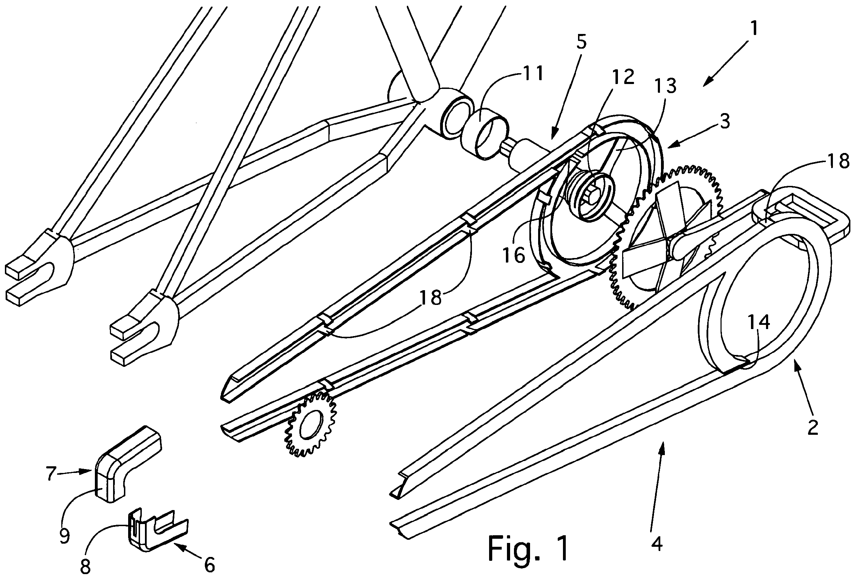

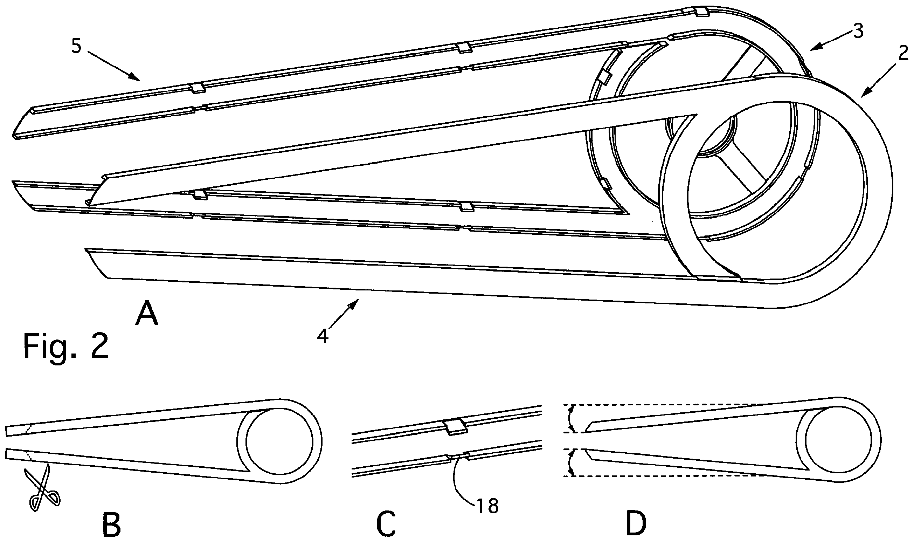

A first preferred embodiment (Fig. 1) according to the present invention relates to a chain casing 1. This comprises two shell parts 2, 4 and 3, 5 respectively. Parts 2, 3 of the shell parts form here the main chain wheel encasing element and parts 4, 5 of the shell parts form the spanning chain part encasing elements. Both shell parts are mutually connectable by means of snap connection elements 18 (Fig. 2C), whereby the shell parts when coupled to each other form the chain casing or a significant part of the housings of the chain casing. Shell parts 2, 3, 4, 5 can be applied on their own, and can also be applied in combination with aligning means 6, 7 and 21 respectively.

Aligning means 6, 7 are provided with respective fastening means 8, 9, wherein only 8 enables a variable setting. Chain wheels of a differing diameter can hereby be applied on this side of the chain casing.

On the other side of the chain casing, the side of the crank in the figure, parts 2, 3 of the shell parts together form an annular element for enclosing the chain and the part of the chain wheel not overlaid by the chain. The interruptions 14, 16 in the annular parts of the shell parts make it possible to align the "legs" for a good adjustment on the side of aligning means 6, 7 (Fig. 2D).

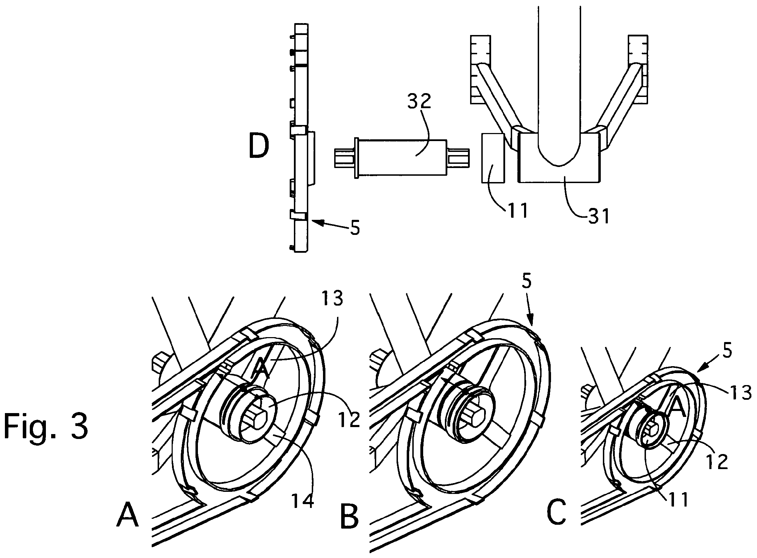

Mounting is shown in greater detail in figure 3. Sliding ring 11 is arranged on the crank, crank assembly 32 or crank housing 31 for allowing free sliding thereon of orientation ring 12 of the mounting means. Orientation ring 12 is connected by means of support parts or bridges 13, 14 to shell part 5.

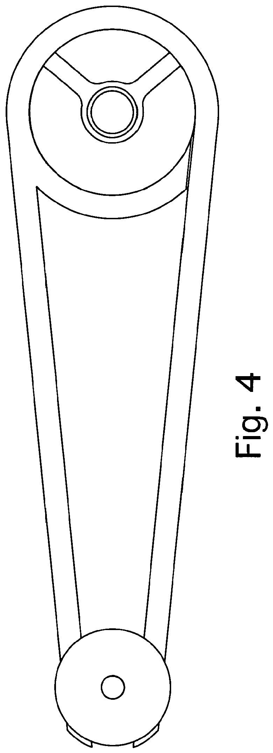

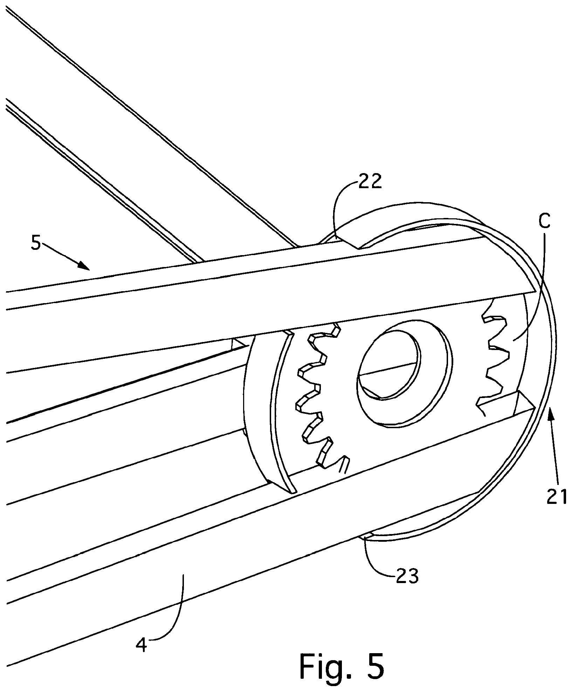

Shown in Fig. 4 and 5 are two alternatives for the aligning means. Fig. 4 shows aligning means 21 with openings in the direction of the main chain wheel and openings in the opposite direction. The arms of the chain casing can be guided through these openings, whereby they are aligned in fitting manner with a secondary chain wheel. In the embodiment of Fig. 5 aligning means 21 are provided with openings 22, 23 on the side of the main chain wheel and the arms of the chain casing end on the inner side of these aligning means 21.

The aligning means according to the present invention are preferably mountable in a manner not shown on the rear axle or on a bush or ring round the rear axle. Aligning means 21 are provided in different sizes to fit in with different chain wheel sizes.

The present invention has been described in the foregoing on the basis of several preferred embodiments. Different aspects of different embodiments are deemed described in combination with each other, wherein all combinations which can be deemed by a skilled person in the field as falling within the scope of the invention on the basis of reading of this document are included. These preferred embodiments are not limitative for the scope of protection of this document. The rights sought are defined in the appended claims.

## Claims

1. Chain casing (1) for encasing a chain of preferably a vehicle such as cycle, the chain casing comprising:
- a main chain wheel encasing element (2,3) for encasing the chain at the position of the main chain wheel such as a pedal spindle chain wheel;
- at least one spanning chain part encasing element (4,5) extending from the main chain wheel encasing element for the purpose of encasing a part of the chain extending from the main chain wheel to a driven chain wheel; and wherein the chain casing comprises
- positioning means (13) for positioning the main chain wheel encasing element for arranging thereof preferably in a predetermined position relative to a central axis of the main chain wheel, wherein the positioning means extend from the main chain wheel encasing element in the direction of a central axis thereof, **characterized by**:
- the chain casing being produced as two moulded shell parts (2,4;3,5), produced to be identical except for mountings of the positioning means thereon.

2. Chain casing as claimed in claim 1, wherein the positioning means (13) are suitable for attachment relative to drive means for driving the main chain wheel or a housing thereof, such as a crank or a crank tube.

3. Chain casing as claimed in claim 1 or 2, wherein the positioning means (13) are suitable for slidable mounting in the direction of the central axis of the main chain wheel, preferably wherein they remain slidable during use.

4. Chain casing as claimed in one or more of the foregoing claims, comprising a mounting element or mounting assembly for mounting on the drive means for driving the main chain wheel or a housing thereof, preferably comprising an external surface suitable for providing a slidable mounting.

5. Chain casing as claimed in one or more of the foregoing claims, wherein a casing assembly (2,3) comprising the main chain wheel encasing element and the spanning chain part encasing element (4,5) are formed together comprising two shell parts.

6. Chain casing as claimed in claim 5, wherein the shell parts are provided with fixing means (18), such as snap fixing means, for mutual attachment of the shell parts.

7. Chain casing as claimed in one or more of the foregoing claims, wherein the shell parts comprise an annular element for the purpose of forming a part of the main chain wheel encasing element, the annular element having an interruption (14) for the purpose of providing a variable diameter and/or circumference of the annular element.

8. Chain casing as claimed in one or more of the foregoing claims, comprising aligning means (21) for aligning one or two spanning chain part encasing elements in a suitable orientation for the purpose of guiding the chain to a further chain wheel or a driven chain wheel, preferably wherein the aligning means take an adjustable form in order to provide an adjustable setting of the direction of the spanning chain part encasing element or elements, preferably relative to the further chain wheel or the driven chain wheel, preferably wherein the aligning means are embodied as one or more solid-state elements, each suitable for one or more chain wheel sizes.

9. Chain casing as claimed in claim 8, wherein the aligning means comprise mounting means for mounting in a predetermined orientation relative to a central axis of the further chain wheel or the driven chain wheel.

10. Chain casing as claimed in one or more of the foregoing claims, wherein the main chain wheel encasing element and/or the spanning chain part encasing element are manufactured from a flexible plastic such as a flexible polymer or mixtures thereof, such as PP.

11. Chain casing as claimed in one or more of the foregoing claims, wherein the main chain wheel encasing element and/or the spanning chain part encasing element have a cross-section suitable for close fitting to the chain.

12. Chain casing as claimed in one or more of the foregoing claims, wherein the height of the spanning chain part encasing element and/or the main chain wheel encasing element is less than three times the height of the chain, preferably less than two and a half times the height of the chain, more preferably less than twice the height of the chain, more preferably less than one and a half times the height of the chain.

13. Chain casing as claimed in one or more of the foregoing claims, wherein the measure of the variable diameter of the main chain wheel encasing element and/or the measure of the interruption (14) of the annular element are instrumental for the alignment of the spanning chain part encasing elements.

14. Method for mounting a chain casing according to one or more of the preceding claims, comprising steps for:
- mounting a mounting element or mounting assembly on drive means for driving a main chain wheel or a housing thereof,
- mounting positioning means for the chain casing slidably relative to the mounting element or mounting assembly.

15. Method as claimed in the foregoing claim 14, comprising steps for:
- optionally mounting the positioning means on a main chain wheel encasing element,
- fixing a shell part of the chain casing to a further shell part of the chain casing in order to form the casing assembly.

## Patentansprüche

1. Kettengehäuse (1) zum Umhüllen einer Kette vorzugsweise eines Fahrzeugs wie z.B. ein Fahrrad, wobei das Kettengehäuse umfasst:
- ein Hauptkettenrad-Ummantelungselement (2,3) zum Umhüllen der Kette an der Position des Hauptkettenrads, wie beispielsweise eines Pedalspindel-Kettenrads;
- mindestens ein Spannkettenteil, das ein Element (4,5) umschließt, das sich von dem Hauptkettenrad-Ummantelungselement erstreckt, um einen Teil der Kette zu umschließen, der sich vom Hauptkettenrad zu einem angetriebenen Kettenrad erstreckt; und wobei das Kettengehäuse umfasst
- Positionierungsmittel (13) zum Positionieren des Hauptkettenrad-Ummantelungselements zum Anordnen davon vorzugsweise in einer vorbestimmten Position relativ zu einer Mittelachse des Hauptkettenrads, wobei sich die Positionierungsmittel erstrecken vom Hauptkettenrad-Umhüllungselement in der Richtung einer Mittelachse davon, **gekennzeichnet durch**:
- Das Kettengehäuse wird als zwei geformte Schalenteile (2,4; 3,5) hergestellt, die mit Ausnahme der Befestigungen der Positionsmittel darauf identisch hergestellt sind.

2. Kettengehäuse nach Anspruch 1, wobei die Positionierungsmittel (13) zur Befestigung relativ zu Antriebsmitteln zum Antreiben des Hauptkettenrads oder eines Gehäuses davon, wie einer Kurbel oder eines Kurbelrohrs, geeignet sind.

3. Kettengehäuse nach Anspruch 1 oder 2, wobei die Positionierungsmittel (13) zur verschiebbaren Montage in Richtung der Mittelachse des Hauptkettenrades geeignet sind, vorzugsweise wobei sie während des Gebrauchs verschiebbar bleiben.

4. Kettengehäuse nach einem oder mehreren der vorstehenden Ansprüche, umfassend ein Befestigungselement oder eine Befestigungsanordnung zur Befestigung an dem Antriebsmittel zum Antreiben des Hauptkettenrads oder eines Gehäuses davon, vorzugsweise umfassend eine Außenfläche, die für die Bereitstellung einer verschiebbaren Montage geeignet ist.

5. Kettengehäuse nach einem oder mehreren der vorstehenden Ansprüche, wobei eine Gehäuseanordnung (2,3), die das Hauptkettenrad-Ummantelungselement und das Spannkettenteil-Umhüllungselement (4,5) umfasst, zusammen gebildet sind, umfassend zwei Schalenteile.

6. Kettengehäuse nach Anspruch 5, wobei die Schalenteile mit Befestigungsmitteln (18), wie Schnappfixiermitteln, zur gegenseitigen Befestigung der Schalenteile versehen sind.

7. Kettengehäuse nach einem oder mehreren der vorstehenden Ansprüche, wobei die Schalenteile ein ringförmiges Element zum Zweck der Bildung eines Teils des Hauptkettenrad-Ummantelungselements umfassen, wobei das ringförmige Element zu diesem Zweck eine Unterbrechung (14) aufweist Bereitstellen eines variablen Durchmessers und/oder Umfangs des ringförmigen Elements.

8. Kettengehäuse nach einem oder mehreren der vorstehenden Ansprüche, umfassend Ausrichtmittel (21) zum Ausrichten eines oder zweier überspannender Kettenteile, die Elemente in einer geeigneten Ausrichtung einschließen, um die Kette zu einer weiteren Kette zu führen Rad oder ein angetriebenes Kettenrad, vorzugsweise wobei die Ausrichtmittel eine einstellbare Form annehmen, um eine einstellbare Einstellung der Richtung des überspannenden Kettenteils bereitzustellen, das ein Element oder Elemente einschließt, vorzugsweise relativ zu dem weiteren Kettenrad oder dem angetriebenen Kettenrad, vorzugsweise wobei die Ausrichtmittel als ein oder mehrere Festkörperelemente ausgeführt sind, die jeweils für eine oder mehrere Kettenradgrößen geeignet sind.

9. Kettengehäuse nach Anspruch 8, wobei die Ausrichtmittel Befestigungsmittel zum Befestigen in einer vorbestimmten Ausrichtung relativ zu einer Mittelachse des weiteren Kettenrads oder des angetriebenen Kettenrads umfassen.

10. Kettengehäuse nach einem oder mehreren der vorstehenden Ansprüche, wobei das Hauptkettenrad-Ummantelungselement und / oder das Spannkettenteil-Ummantelungselement aus einem flexiblen Kunststoff wie einem flexiblen Polymer oder Gemischen davon wie z PP.

11. Kettengehäuse nach einem oder mehreren der vorstehenden Ansprüche, wobei das Hauptkettenrad-ummantelungselement und/oder das Spannkettenteil-Ummantelungselement einen Querschnitt aufweisen, der zur engen Anpassung an die Kette geeignet ist.

12. Kettengehäuse nach einem oder mehreren der vorstehenden Ansprüche, wobei die Höhe des umhüllenden Kettenteil-Umhüllungselements und/oder des Hauptkettenrad-Umhüllungselements weniger als das Dreifache der Kettenhöhe beträgt, vorzugsweise weniger als zwei und ein halbes Mal die Höhe der Kette, bevorzugter weniger als das Doppelte der Höhe der Kette, bevorzugter weniger als das Eineinhalbfache der Höhe der Kette.

13. Kettengehäuse nach einem oder mehreren der vorstehenden Ansprüche, wobei das Maß des variablen Durchmessers des Hauptkettenrad-Ummantelungselements und/oder das Maß der Unterbrechung (14) des ringförmigen Elements maßgeblich sind für die Ausrichtung der Spannkettenteil-Umhüllungselemente.

14. Verfahren zum Montieren eines Kettengehäuses gemäß einem oder mehreren der vorhergehenden Ansprüche, umfassend Schritte für:
- Montage eines Montageelements oder einer Montagebaugruppe an Antriebsmitteln zum Antrieb eines Hauptkettenrads oder eines Gehäuses davon,
- Montagepositionierungsmittel für das Kettengehäuse verschiebbar relativ zum Montageelement oder zur Montagebaugruppe.

15. Verfahren nach dem vorstehenden Anspruch 14, umfassend Schritte für:
- Optionales Anbringen der Positioniermittel an einem Hauptkettenrad-Ummantelungselement,
- Befestigen eines Schalenteils des Kettengehäuses an einem weiteren Schalenteil des Kettengehäuses, um die Gehäuseanordnung zu bilden.

## Revendications

1. Carter de chaîne (1) pour envelopper une chaîne de préférence d'un véhicule tel qu'un cycle, le Carter de chaîne comprenant:
- un élément d'enveloppe de roue de chaîne principale (2,3) pour envelopper la chaîne à la position de la roue de chaîne principale, tel qu'une roue de chaîne à axe de pédale;
- au moins un élément enveloppant une partie de chaîne (4, 5) s'étendant depuis élément d'enveloppe de roue de chaîne principale dans le but d'envelopper une partie de la chaîne s'étendant de la roue de chaîne principale à une roue de chaîne entraînée; et dans lequel le carter de chaîne comprend
- des moyens de positionnement (13) pour positionner l'élément enveloppant la roue à chaîne principale pour l'agencer de préférence dans une position prédéterminée par rapport à un axe central de la roue à chaîne principale, dans lequel les moyens de positionnement s'étendent depuis l'élément enveloppant la roue à chaîne principale dans la direction d'un axe central de celui-ci, **caractérisé par**:
- le carter de chaîne étant réalisé en deux parties de coque moulées (2,4; 3,5), réalisées pour être identiques à l'exception du montage des moyens de positionnement sur celui-ci.

2. Carter de chaîne selon la revendication 1, dans lequel les moyens de positionnement (13) sont aptes à être fixés par rapport aux moyens d'entraînement pour entraîner la roue de chaîne principale ou un logement de celle-ci, tel qu'une manivelle ou un tube de manivelle.

3. Carter de chaîne selon la revendication 1 ou 2, dans lequel les moyens de positionnement (13) sont aptes à un montage coulissant dans la direction de l'axe central de la roue de chaîne principale, de préférence dans lesquels ils restent coulissants pendant l'utilisation.

4. Carter de chaîne selon l'une ou plusieurs des revendications précédentes, comprenant un élément de montage ou un ensemble de montage aptes à être monté sur les moyens d'entraînement pour entraîner la roue de chaîne principale ou un boîtier de celle-ci, comprenant de préférence une surface externe appropriée pour fournir une montage coulissant.

5. Carter de chaîne selon l'une ou plusieurs des revendications précédentes, dans lequel un ensemble d'enveloppe (2, 3) comprenant l'élément d'enveloppe de roue de chaîne principale et l'élément d'enveloppe de partie de chaîne s'étendant (4,5) sont formés ensemble comprenant deux parties de coque.

6. Carter de chaîne selon la revendication 5, dans lequel les parties de coque sont pourvues de moyens de fixation (18), tels que des moyens de fixation par encliquetage, pour une fixation mutuelle des parties de coque.

7. Carter de chaîne selon l'une ou plusieurs des revendications précédentes, dans lequel les parties de coque comprennent un élément annulaire dans le but de former une partie de l'élément enveloppant la roue de chaîne principale, l'élément annulaire ayant une interruption (14) à cet effet. de fournir un diamètre et/ou une circonférence variables de l'élément annulaire.

8. Carter de chaîne selon l'une ou plusieurs des revendications précédentes, comprenant des moyens d'alignement (21) pour aligner une ou deux éléments enveloppant une partie de chaîne enfermant des éléments dans une orientation aptes à le but de guider la chaîne vers une chaîne supplémentaire roue ou roue à chaîne entraînée, de préférence dans laquelle les moyens d'alignement prennent une forme ajustable afin de fournir un réglage réglable de la direction de la élément ou éléments d'enveloppe de roue de chaîne principale, de préférence par rapport à l'autre roue à chaîne ou à la roue de chaîne entraînée, de préférence à l'endroit où les moyens d'alignement sont réalisés sous la forme d'un ou plusieurs éléments à l'état solide, chacun aptes à une ou plusieurs tailles de roue à chaîne.

9. Carter de chaîne selon la revendication 8, dans lequel les moyens d'alignement comprennent des moyens de montage pour un montage dans une orientation prédéterminée par rapport à un axe central de l'autre roue à chaîne ou de la roue à chaîne entraînée.

10. Carter de chaîne selon l'une ou plusieurs des revendications précédentes, dans lequel l'élément de carter de roue de chaîne principale et/ou l'élément enveloppant une partie de chaîne s'étendant sont fabriqués à partir d'un plastique flexible tel qu'un polymère flexible ou de mélanges de ceux-ci, tels que PP.

11. Carter de chaîne selon l'une ou plusieurs des revendications précédentes, dans lequel l'élément de carter de roue de chaîne principale et/ou l'élément enveloppant une partie de chaîne s'étendant ont une section aptes à un ajustement serré sur la chaîne.

12. Carter de chaîne selon l'une ou plusieurs des revendications précédentes, dans lequel la hauteur de l'élément d'enveloppe de partie de chaîne s'étendant et/ou de l'élément d'enveloppe de roue de chaîne principale est inférieure à trois fois la hauteur de la chaîne, de préférence inférieure à deux et une moitié de la hauteur de la chaîne, plus préférablement moins de deux fois la hauteur de la chaîne, plus préférablement moins d'une et demie fois la hauteur de la chaîne.

13. Carter de chaîne selon l'une ou plusieurs des revendications précédentes, dans lequel la mesure du diamètre variable de l'élément enveloppant la roue de chaîne principale et/ou la mesure de l'interruption (14) de l'élément annulaire sont instrumentales pour l'alignement des éléments d'enveloppe de la partie de chaîne s'étendant.

14. Procédé de montage d'un carter de chaîne selon une ou plusieurs des revendications précédentes, comprenant des étapes pour:
- monter un élément de montage ou un ensemble de montage sur des moyens d'entraînement pour entraîner une roue de chaîne principale ou un boîtier de celle-ci,
- des moyens de positionnement de montage pour le carter de chaîne coulissant par rapport à l'élément de montage ou à l'ensemble de montage.

15. Procédé selon la revendication 14 précédente, comprenant les étapes de:
- monter optionnellement les moyens de positionnement sur un élément de carter de roue de chaîne principale,
- fixer une partie de coque du carter de chaîne à une autre partie de coque du carter de chaîne afin de former l'ensemble de carter.
